(19) Europäisches Patentamt
European Patent Office
Office européen des brevets

(11) **EP 2 423 480 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(51) Int Cl.:
*F01N 9/00* $^{(2006.01)}$ *F01N 11/00* $^{(2006.01)}$
*F02D 41/02* $^{(2006.01)}$ *F02D 41/14* $^{(2006.01)}$
*F02D 41/22* $^{(2006.01)}$

(21) Anmeldenummer: **11005198.4**

(22) Anmeldetag: **27.06.2011**

(54) **Verfahren zur Verifizierung eines unter Anwendung wenigstens einer Messung ermittelten ersten Wertes, Verfahren zur Behandlung eines Diesel-Partikelfilters und Vorrichtung zur Verifizierung eines Differenzdruckwertes**

Method for verifying an initial value determined using at least one measurement, method for treating a diesel particulate filter and device for verifying a differential pressure value

Dispositif pour vérifier une première valeur estimée par la mise en oeuvre d'au moins une mesure, procédé de traitement d'un filtre à particules diesel et dispositif de vérification d'une pression différentielle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2010 DE 102010035705**

(43) Veröffentlichungstag der Anmeldung:
**29.02.2012 Patentblatt 2012/09**

(73) Patentinhaber: **Volkswagen Aktiengesellschaft 38440 Wolfsburg (DE)**

(72) Erfinder: **Ruhnke, Andreas 30173 Hannover (DE)**

(56) Entgegenhaltungen:
**EP-A2- 1 777 399        DE-A1- 10 145 863
DE-A1-102004 040 924    DE-A1-102009 001 528
US-A1- 2009 193 904**

**Beschreibung**

Die vorliegende Erfindung betrifft ein Verfahren zur Verifizierung eines unter Anwendung wenigstens einer Messung ermittelten ersten Wertes eines Differenzdruckwertes an einem Diesel-Partikelfilter eines Abgasstranges eines Dieselaggregates, wobei die Differenz zwischen diesem ersten Wert und einem Korrekturwert mit einem Toleranzschwellwert verglichen wird, und im Fall einer Differenz, die größer als der Toleranzschwellwert ist, der erste Wert als nicht wahr erkannt wird, wobei der Korrekturwert einem ersten Differenzdruck-Basiswert entspricht.

Erfindungsgemäß ist vorgesehen, dass der erste Differenzdruck-Basiswert aus einer Extrapolation einer Funktion ermittelt wird, die aus während der Durchströmung des Diesel-Partikelfilters ermittelten Wertepaaren vom Abgasmassenstrom und unkorrigiertem Differenzdruckwert generiert wird, wobei der erste Differenzdruck-Basiswert dem Wert der extrapolierten Funktion bei einem theoretischen Abgasmassenstrom von Null entspricht.

Außerdem wird erfindungsgemäß eine Vorrichtung zur Verifizierung eines Differenzdruckwertes $\Delta p$ an einem Diesel-Partikelfilter eines Abgasstranges eines Dieselaggregates zur Verfügung gestellt, welche das erfindungsgemäße Verfahren zur Verifizierung durchführen kann.

Vervollständigt wird die vorliegende Erfindung durch eine Vorrichtung zur Behandlung, insbesondere zur Regenerierung eines Diesel-Partikelfilters, welche eine erfindungsgemäße Vorrichtung zur Verifizierung eines Differenz-druckwertes $\Delta p$ umfasst; sowie durch ein Kraftfahrzeug, welches eine Vorrichtung zur Behandlung eines Diesel-Partikelfilters aufweist.

Des Weiteren wird ein Computerprogramm zur Verfügung gestellt, welches es ermöglicht, das Verfahren zur Verifizierung eines Differenzdruckwertes $\Delta p$ an einem Diesel-Partikelfilter eines Abgasstranges eines Dieselaggregates gemäß der Erfindung durchzuführen.

Diesel-Partikelfilter müssen in regelmäßigen Abständen von etwa 500 - 1500 km Fahrleistung in einer Regenerationsphase vom gesammelten Ruß befreit werden. Dazu wird der Motor von der Normalbetriebsart in die Diesel-Partikelfilter-Regenerationsbetriebsart umgeschaltet. In der Diesel-Partikelfilter-Regenerationsbetriebsart wird der Ruß auf dem Diesel-Partikelfilter bei Abgastemperaturen von 823 - 923 K verbrannt. Die Anforderung der Diesel-Partikelfilter-Regeneration erfolgt in Abhängigkeit der Diesel-Partikelfilter-Rußbeladung. Zur Bestimmung der Diesel-Partikelfilter-Rußbeladung wird/werden üblicherweise ein Diesel-Partikelfilter-Druckverlustmodell und/oder ein Rußmassen-Simulationsmodell eingesetzt, wobei die berechnete Rußmasse dem Maximum beider Modellwerte entspricht. Während das Rußmassen-Simulationsmodell ein reines Berechnungsmodell ist, das keine messtechnischen Rückschlüsse auf den tatsächlichen Rußbeladungszustand zulässt, wird bei dem Druckverlustmodell aus den thermodynamischen Zustandgrößen des Abgases (Temperatur, Druck, Massenstrom) der Strömungswiderstand des Diesel-Partikelfilter als Funktion der Rußmasse messtechnisch erfasst. Das Diesel-Partikelfilter-Druckverlustmodell arbeitet somit unabhängig vom Rußmassen-Simulationsmodell und ist zur Gewährleistung einer hinreichenden Modellgüte der Rußmassenberechnung unverzichtbar.

Die Modellgüte der Rußmassenberechnung ist dabei ein wichtiger Parameter für die Prozesssicherheit des Gesamtsystems. Ist die tatsächliche Rußmasse auf dem Diesel-Partikelfilter höher als die modellierte Rußmasse, treten bei der Diesel-Partikelfilter-Regeneration unzulässig hohe Temperaturen infolge der Rußüberbeladung auf, die zur Zerstörung des Diesel-Partikelfilters führen können. Im umgekehrten Fall (tatsächliche Rußmasse < modellierte Rußmasse) wird die zulässige Rußbeladungskapazität des Diesel-Partikelfilters nicht vollständig ausgenutzt. Als negative Folge treten unnötig häufige Diesel-Partikelfilter-Regenerationen und damit ein erhöhter Kraftstoffverbrauch auf. Darüber hinaus kann es infolge verstärkter Motorölverdünnung zu erhöhtem Triebwerksverschleiß kommen.

Die Genauigkeit des Diesel-Partikelfilter-Druckverlustmodells hängt entscheidend von der exakten Messung des Druckverlustes über dem Diesel-Partikelfilter ab.

Die Messung des Druckverlustes erfolgt entweder direkt über einen Differenzdrucksensor oder indirekt über einen Relativdrucksensor, der den Abgasdruck vor dem Diesel-Partikelfilter relativ zum Umgebungsdruck erfasst. Der Druckverlust über dem Diesel-Partikelfilter wird dann unter Zuhilfenahme eines Strömungsmodells für den hinteren Teil der Abgasanlage aus dem gemessenen Relativdruck berechnet.

Aus der DE 10 2004 057 612 B4 ist ein Verfahren zur Einstellung einer Drosselklappe bekannt sowie eine Vorrichtung zur Durchführung des Verfahrens. Das Verfahren umfasst einen Verfahrensschritt der Erkennung einer Blockade des Arbeitsweges der Drosselklappe. Dabei wird eine Position der Drosselklappe mit einem bestimmten Schwellenwert verglichen und daraus der Schluss gezogen, ob die Drosselklappe normal betrieben werden kann. Das heißt, dass aus einem Vergleich eines Ist-Wertes mit einem Soll-Wert ein Steuersignal zur Steuerung des Betriebes der Drosselklappe generiert wird. Gemessene Werte werden dabei als wahr angenommen.

Aus der DE 10 2004 007 000 A1 ist eine Abgasemissionssteuerungsvorrichtung für eine Verbrennungskraftmaschine bekannt. Diese Abgasemissionssteuerungsvorrichtung führt ein Verfahren zur Korrektur von ermittelten Druckwerten durch. Dabei wird ein Korrekturfaktor generiert, mit dem eine Abweichung des gemessenen Drucksignals korrigierbar ist. Dadurch lässt sich ein exaktes Drucksignal erzeugen, wodurch optimal Einfluss genommen werden kann auf die Betriebsweise eines Aggregates beziehungsweise auf die Behandlung eines Abgasreinigungsfilters.

Die Druckschrift EP 1 777 399 A2 offenbart ein Verfahren und Vorrichtung zur Erkennung eines fehlerhaften Anschlusses eines Differenzdrucksensors Verfahren und Vorrichtung zur Erkennung eines fehlerhaften Anschlusses eines Differenzdrucksensors.

Zum Stand der Technik gehören ferner die Druckschriften DE 101 45 863 A1, DE 10 2004 040924 A1, DE 10 2009 001 528 A1 und US 2009/193904 A1.

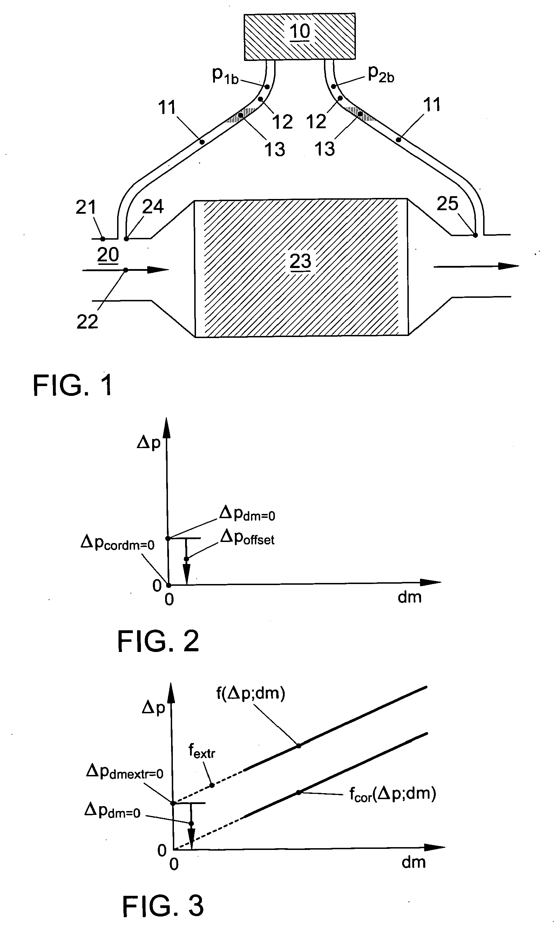

Eine übliche Anordnung eines elektronischen Abgas-Drucksensors 10 zur Messung des Relativdruckes oder Differenzdruckes am Diesel-Partikelfilter 23 ist in Figur 1 dargestellt. Figur 1 zeigt den Abschnitt einer Abgasanlage, in der der Diesel-Partikelfilter 23 angeordnet ist. Der Drucksensor 10 ist karosseriefest montiert und über flexible Druckmessleitungen 11 an die Druckentnahmestellen an Positionen stromaufwärts des Diesel-Partikelfilters 24 und stromabwärts 25 des Diesel-Partikelfilters in der Abgasanlage angeschlossen, um sowohl eine Schwingungsentkopplung als auch eine Temperaturentkopplung des empfindlichen Bauteils von der heißen Abgasanlage zu gewährleisten.

Mittels des Drucksensors 10 wird entweder der Druck des Abgases 20 an einer Position stromaufwärts 24 des Dieselpartikelfilters 23 und an einer Position stromabwärts 25 des Dieselpartikelfilters 23, bezogen auf die Strömungsrichtung 22, direkt gemessen oder es wird aus Messungen des Abgasmassenstromes dm, der Dichte des Abgases p und der dynamischen Viskosität η des Abgases sowie unter Zuhilfenahme bauteilspezifischer Permeabilitätskoeffizienten $k_1$ und $k_2$ mithilfe der Gleichung

$$\Delta p = k_1 \bullet \frac{\eta}{\rho} \bullet dm + k_2 \bullet \frac{1}{\rho} \bullet dm^2 \qquad (1)$$

der Druckverlust Δp über dem Diesel-Partikelfilter 23 errechnet. Bei einem relativ großen Temperaturunterschied zwischen der Umgebung des Diesel-Partikelfilters 23 und des Abgasstranges 21 kann es zur Kondensation in den Druckmessleitungen 11 kommen. Bei Temperaturen in der Umgebung unter dem Gefrierpunkt von Wasser können sich durch Vereisungen des Kondensats Blockierungen 13 in den Druckmessleitungen 11 bilden. Dadurch entstehen blockierte Bereiche 12 in den Druckmessleitungen 11. Der Druck in einem ersten blockierten Bereich $p_{1b}$ sowie auch der Druck in einem zweiten blockierten Bereich $p_{2b}$ entspricht dabei nicht mehr den Druckverhältnissen, die im Abgasstrang 21 in einer Position stromaufwärts 24 beziehungsweise in einer Position stromabwärts 25 am Diesel-Partikelfilter 23 bestehen. Das heißt, dass bei einer Blockierung der Druckmessleitungen 11 der Drucksensor 10 nicht die korrekten Druckverhältnisse stromaufwärts und stromabwärts des Diesel-Partikelfilters 23 ermitteln kann, so dass auch keine exakte Ermittlung der Rußbeladung mittels eines Druckvergleiches möglich ist. Demzufolge ist auch nicht feststellbar, zu welchem Zeitpunkt welche Maßnahme zur Behandlung des Diesel-Partikelfilters 23 einzuleiten ist.

Das heißt, dass die aus den beschriebenen technischen Gründen notwendige Anordnung des Drucksensors 11 den prinzipiellen Mangel birgt, dass Wasserdampf aus dem warmen Abgas in den kühleren Messleitungen 11 bis hin zum Gehäuse des Drucksensors 10 kondensiert. Bei Bauteiltemperaturen unter 273 K gefriert das Kondensat in den Messleitungen 11 oder im Gehäuse des Drucksensors 10 und kann im Fahrzeugbetrieb zu einem unbrauchbaren Messsignal führen. Infolge können massive Diesel-Partikelfilter-Fehlfunktionen bis hin zum Notlauf des Motors oder irreversible Schädigungen des Diesel-Partikelfilters 23 auftreten, die aus einer falsch berechneten Rußmasse aus dem Diesel-Partikelfilter-Druckverlustmodell resultieren.

Mit vertretbarem Aufwand, das heißt ohne eine elektrische Beheizung der Messleitungen und des Sensorgehäuses, kann systembedingt nicht in allen Betriebssituationen ausgeschlossen werden, dass Kondensat in den Druckmessleitungen oder im Sensorgehäuse gefriert und zu unplausiblen Messsignalen führt.

Der Erfindung liegt daher die Aufgabe zugrunde, ein Verfahren und eine Vorrichtung zur Verfügung zu stellen, mit denen ein unplausibles Messsignal erkannt werden kann und eine fehlerhafte Berechnung der Rußmasse und damit eine fehlerhafte Behandlung des Diesel-Partikelfilters unterdrückt werden kann.

Erfindungsgemäß wird ein Verfahren zur Verifizierung-eines unter Anwendung wenigstens einer Messung ermittelten ersten Wertes, insbesondere eines Differenzdruckwertes Δp an einem Diesel-Partikelfilter eines Abgasstranges eines Dieselaggregates, zur Verfügung gestellt, wobei die Differenz zwischen diesem ersten Wert und einem Korrekturwert mit einem Toleranzschwellwert verglichen wird, und im Fall einer Differenz, die größer als der Toleranzschwellwert ist, der erste Wert als nicht wahr erkannt wird. Erfindungsgemäß ist vorgesehen, dass im Fall einer Differenz, die kleiner als der Toleranzschwellwert ist, der erste Wert als wahr erkannt wird.

Die Erfindung wird im Folgenden anhand ihrer bevorzugten Anwendung an einem Diesel-Partikelfilter beziehungsweise an dessen Behandlung beschrieben.

Der Druckverlust über den Diesel-Partikelfilter Δp lässt sich durch die bekannte Darcy-Forchheimer-Gleichung

$$\Delta p = k_1 \bullet \frac{\eta}{\rho} \bullet dm + k_2 \bullet \frac{1}{\rho} \bullet dm^2 \qquad (1)$$

berechnen, oder alternativ aus Messungen des Drucks stromaufwärts und stromabwärts des Diesel-Partikelfilters berechnen.

Die Größe dm steht dabei für den Abgasmassenstrom, $\rho$ für die Dichte und $\eta$ für die dynamische Viskosität des Abgases. Die Faktoren $k_1$ und $k_2$ sind bauteilspezifische Permeabilitätskoeffizenten des Diesel-Partikelfilters und mathematisch beschrieben. Sie verkörpern jeweils einen Faktor für die Durchgängigkeit des Diesel-Partikelfilters mit Abgas. Aus der Gleichung geht hervor, dass der Druckverlust $\Delta p$ an einem nicht durchströmten Strömungswiderstand wie zum Beispiel einem Diesel-Partikelfilter stets identisch null sein muss. Dieser grundlegende physikalische Zusammenhang wird zum Beispiel in einem elektronischen Motorsteuergerät genutzt, um eine individuelle Sensorkalibrierung vorzunehmen, mit dem Ziel, Bauteilstreuungen (Nullpunkt-Offset) beziehungsweise Sensordrift (Offsetdrift) auszugleichen.

Dabei kann vorgesehen sein, dass der erste Wert ein Differenzdruckwert $\Delta p$ an einem Diesel-Partikelfilter eines Abgasstranges eines Dieselaggregates ist, und der Korrekturwert $\Delta p_{offset}$ einem zweiten Differenzdruck-Basiswert $\Delta p_{dm=0}$ am Diesel-Partikelfilter entspricht, wenn der Diesel-Partikelfilter nicht von Abgas durchströmt wird, und wenn von einer zutreffenden Differenzdruckermittlung ausgegangen werden kann, wobei der zweite Differenzdruck-Basiswert $\Delta p_{dm=0}$ ein aus Messungen am Diesel-Partikelfilter ermittelter Wert ist, wenn kein Abgasmassenstrom im Diesel-Partikelfilter vorhanden ist.

Das heißt, dass der Korrekturwert $\Delta p_{offset}$ im Zuge einer statischen Offsetadaption ermittelbar ist, die gegebenenfalls in einem Steuergerätenachlauf durchgeführt wird, wenn der Dieselmotor ausgeschaltet ist und demzufolge kein Abgasmassestrom vorhanden ist.

Es ist dann nicht von einer zutreffenden Differenzdruckermittlung auszugehen, wenn zum Beispiel die Umgebungstemperatur unter 273 K ist, so dass Eisbildung in Messleitungen wahrscheinlich ist. Das heißt, dass der Korrekturwert $\Delta p_{offset}$ dem Differenzdruck-Basiswert $\Delta p_{dm=0}$ am Diesel-Partikelfilter entspricht, wenn der Diesel-Partikelfilter nicht von Abgas durchströmt wird und wenn Messleitungen durch Eis blockiert sind. Erfindungsgemäß ist vorgesehen, dass der erste Wert ein Differenzdruckwert $\Delta p$ an einem Diesel-Partikelfilter eines Abgasstranges eines Dieselaggregates ist, und der Korrekturwert $\Delta p_{offset}$ einem ersten Differenzdruck-Basiswert $\Delta p_{dmextr=0}$ entspricht, und der erste Differenzdruck-Basiswert $\Delta p_{dmextr=0}$ aus einer Extrapolation einer Funktion ermittelt wird, die aus während der Durchströmung des Diesel-Partikelfilters ermittelten Wertepaaren vom Abgasmassenstrom $dm_x$ und unkorrigiertem Differenzdruckwert $\Delta p_x$ generiert wird, wobei der erste Differenzdruck-Basiswert $\Delta p_{dmextr=0}$ dem Wert der extrapolierten Funktion bei einem theoretischen Abgasmassenstrom von null entspricht.

Eine solche dynamische Offsetadaption wird während des Betriebes eines Dieselaggregates vorgenommen, wenn ein Abgasmassenstrom existiert (dm>0).

Auch hier erfolgt die Ermittlung des Korrekturwertes $\Delta p_{offset}$, wenn von einer zutreffenden Differenzdruckermittlung ausgegangen werden kann, wenn kein Zusetzen der Druckmessleitungen mit Eis aufgrund der Umgebungstemperatur möglich ist.

Der Toleranzschwellwert ist vorteilhafterweise ein Wert aus dem Bereich zwischen 10 hPa und 50 hPa, insbesondere zwischen 20 hPa und 30 hPa.

Der Toleranzschwellwert kann in Abhängigkeit von der Temperatur des Abgasstranges oder des Diesel-Partikelfilters oder des Sensors festgelegt sein.

Die Wertepaare können gegebenenfalls normiert sein, das heißt, dass Wertepaare verwendet werden, deren Werte sich bei bestimmten, vorher definierten Temperaturen und/oder Druckwerten einstellen.

Vorteilhafterweise wird der absolute Betrag der Differenz zwischen dem ersten Wert und dem Korrekturwert mit dem Toleranzschwellwert verglichen.

Ist der Term $|\Delta p_{dm=0} - \Delta p_{offset}|$ größer als die definierte Toleranzschwelle, ist die Sensorik mit hoher Wahrscheinlichkeit eingefroren. Ist der Term $|\Delta p_{dm=0} - \Delta p_{offset}|$ kleiner als die definierte Toleranzschwelle, ist die Sensorik mit hoher Wahrscheinlichkeit, trotz des potentiellen Verdachts auf Einfrierung aufgrund niedriger Temperaturen, nicht eingefroren.

Ein weiterer Aspekt der Erfindung ist ein Verfahren zur Behandlung eines Diesel-Partikelfilters, insbesondere zur Regenerierung eines Diesel-Partikelfilters, bei dem das erfindungsgemäße Verfahren zur Verifizierung eines Differenzdruckwertes $\Delta p$ an einem Diesel-Partikelfilter eines Abgasstranges eines Dieselaggregates durchgeführt wird, wobei bei Erkennung, dass der Differenzdruckwert $\Delta p$ nicht wahr ist, ein Signal generiert wird, dessen Aussage ist, dass wenigstens ein Sensor nicht funktionsfähig ist.

Die Aussage des Signals kann zum Beispiel die Information "Sensor eingefroren" aufweisen.

Umgekehrt wird vorteilhafterweise bei Erkennung, dass der Differenzdruckwert $\Delta p$ wahr ist, ein Signal mit der Information "Sensor nicht eingefroren" generiert.

Selbstverständlich sind auch alternative wörtliche Aussagen möglich, wichtig ist dabei jedoch eine Aussage, dass die Druckmessung korrekt oder möglich ist beziehungsweise nicht korrekt oder möglich ist.

Ein Steuergerät zur Verwertung des Signals kann dabei derart eingestellt sein, dass in einer Grundeinstellung das Signal "Sensor eingefroren" generiert wird

Dieses Signal wird so lange beibehalten, bis eine neue Messung des zweiten Differenzdruck-Basiswertes $\Delta p_{dm=0}$ oder Berechnung des ersten Differenzdruck-Basiswertes $\Delta p_{dmextr=0}$ den Wert des Signals "Sensor eingefroren" durch erfindungsgemäßen Vergleich der Differenz zwischen Differenzdruckwert und dem Korrekturwert mit dem Toleranzschwellwert ändert.

Alternativ kann der letzte Wert des Signals "Sensor eingefroren" vor Abschalten des elektronischen Motorsteuergerätes in dessen Festspeicher gespeichert werden und im nächsten Fahrzyklus beim Einschalten des Steuergerätes als Initialisierungswert für das Signal "Sensor eingefroren" zur Verfügung gestellt werden. Der letzte berechnete Wert wird so lange beibehalten, bis eine neue Messung des zweiten Differenzdruck-Basiswertes $\Delta p_{dm=0}$ oder Berechnung des ersten Differenzdruck-Basiswertes $\Delta p_{dmextr=0}$ den Wert des Signals "Sensor eingefroren" durch erfindungsgemäßen Vergleich der Differenz zwischen Differenzdruckwert und dem Korrekturwert mit dem Toleranzschwellwert aktualisiert.

Ist das Signal mit der Information, dass wenigstens ein Sensor nicht funktionsfähig ist, generiert worden, wird die Rußmassenberechnung nicht mittels eines Diesel-Partikelfilter-Druckverlustmodells ausgewertet. Die Rußmassenberechnung stützt sich bei dem Signal über die Nicht-Funktionsfähigkeit allein auf die Berechnungsergebnisse eines Rußmassen-Simulationsmodells, welches ein reines Berechnungsmodell ist, das keine messtechnischen Rückschlüsse auf den tatsächlichen Rußbeladungszustand zulässt.

Das heißt, dass temporär beim Signal über die Nicht-Funktionsfähigkeit folglich eine größere Modellunsicherheit in Kauf genommen werden muss.

In bevorzugter Ausgestaltung ist vorgesehen, dass, wenn das Signal über die Nicht-Funktionsfähigkeit des Sensors länger als eine bestimmte Zeit und/oder über eine bestimmte Fahrdistanz eines mit dem Diesel-Partikelfilter versehenen Fahrzeugs und/oder über eine bestimmte Anzahl von Fahrzyklen eines mit dem Diesel-Partikelfilter versehenen Fahrzeugs ununterbrochen vorhanden ist, ein Signal über einen Systemfehler generiert wird.

Dieses Signal über einen Systemfehler wird weiterer Verarbeitung zugeleitet und/oder zur Anzeige gebracht, um mögliche Schäden des Diesel-Partikelfilters durch Rußüberladung zu vermeiden, da nicht ausgeschlossen werden kann, dass sich eine unzulässig hohe Rußmasse auf dem Diesel-Partikelfilter abgelagert hat. Das heißt, dass mittels des Druckmodells die Rußmasse länger als die bestimmte Zeit und/oder über eine bestimmte Fahrstrecke hinweg und/oder über eine bestimmte Anzahl von Fahrzyklen dauerhaft nicht ermittelt werden konnte, so dass eine Information über einen Systemfehler wegen zu hoher Modellunsicherheit zu generieren ist.

Dieses Systemfehler-Signal lässt eine Einfrierung am Diesel-Partikelfilter erkennen. Außerdem wird aufgrund des Systemfehlers keine Umschaltung von der Normalbetriebsart in die Diesel-Partikelfilter-Regenerationsbetriebsart vorgenommen, um unnötig häufige Diesel-Partikelfilter-Regenerationen und damit eine Erhöhung des Kraftstoffverbrauches zu vermeiden. Ebenfalls wird einer Erhöhung des Triebwerksverschleißes vorgebeugt.

Das heißt, dass bei dauerhaft eingefrorenem Sensor gezielt ein Systemfehler gesetzt und angezeigt wird, um mögliche Folgeschäden am Diesel-Partikelfilter-System aufgrund einer unzureichenden Modellgenauigkeit der Rußmassenberechnung zu vermeiden. Vorteilhafterweise sind die bestimmte Zeit und/oder die bestimmte Fahrdistanz und/oder die bestimmte Anzahl von Fahrzyklen kalibrierbar.

Eine solche bestimmte Zeit kann zum Beispiel innerhalb einer Zeitspanne von 60 bis 300 min sein. Eine bestimmte Fahrdistanz kann sinnvollerweise zwischen 50 und 250 km betragen. Eine sinnvolle Anzahl von Fahrzyklen beträgt zwischen 5 und 25.

Da es zu unwahren Aussagen hinsichtlich des Differenzdruckwertes $\Delta p$ insbesondere dann kommt, wenn Sensorleitungen vereist und damit zumindest teilweise blockiert sind, ist von der Wahrheit ermittelter Differenzdruckwerte $\Delta p$ dann auszugehen, wenn die Temperatur der Umgebung des Diesel-Partikelfilters beziehungsweise der daran angeordneten Sensoren über dem Gefrierpunkt von Wasser (273 K) liegt, wobei Abwärme des Abgasstranges zur Erhöhung der Umgebungstemperatur beiträgt.

Das heißt, dass zumindest bei Umgebungstemperaturen von über 273 K vom Wahrheitsgehalt der Aussage über den Differenzdruckwert $\Delta p$ ausgegangen werden kann.

Außerdem wird erfindungsgemäß eine Vorrichtung zur Verifizierung eines Differenzdruckwertes $\Delta p$ an einem Diesel-Partikelfilter eines Abgasstranges eines Dieselaggregates zur Verfügung gestellt, mit einer Einrichtung zur Messung eines Abgasmassenstroms dm, der Dichte $\rho$ und dynamischer Viskosität $\eta$ des Abgases, und einer Berechnungseinrichtung zur Berechnung des Differenzdruckwertes $\Delta p$, sowie mit einer Einrichtung zur Ermittlung eines Korrekturwertes und einer Einrichtung zur Ermittlung einer Differenz zwischen dem Differenzdruckwert $\Delta p$ und dem Korrekturwert, mit einem Speicher, in dem wenigstens ein Toleranzschwellwert speicherbar oder gespeichert ist, und mit einer Vergleichseinheit zum Vergleichen der ermittelten Differenz mit einem Toleranzschwellwert und zur Auswertung des Vergleiches zur Erzeugung einer Aussage über die Wahrheit der Aussage des berechneten Differenzdruckwertes $\Delta p$.

Die Ermittlung eines Korrekturwertes in der diese Operation durchführenden Einrichtung erfolgt gemäß des erfindungsgemäßen Verfahrens.

Des Weiteren betrifft die Erfindung eine Vorrichtung zur Behandlung, insbesondere zur Regenerierung eines Diesel-Partikelfilters, welche eine erfindungsgemäße Vorrichtung zur Verifizierung eines Differenzdruckwertes $\Delta p$ umfasst, sowie eine Einrichtung zur Erzeugung und Ausgabe und/oder Verwertung eines Signals entsprechend der gewonnenen Information über die Wahrheit des berechneten Differenzdruckwertes $\Delta p$.

Vorteilhafterweise ist die Einrichtung zur Erzeugung und Ausgabe und/oder Verwertung eines Signals derart ausgestaltet, dass bei Erkennung, dass der Differenzdruckwert $\Delta p$ nicht wahr ist, ein Signal mit der Information über die Nicht-Funktionsfähigkeit des Sensors wie zum Beispiel "Sensor eingefroren" generiert wird.

Die Messung eines Abgasmassenstroms dm, der Dichte $\rho$ und dynamischer Viskosität $\eta$ kann dabei in einer Einrichtung oder in einzelnen, den jeweiligen Größen zugeordneten Einrichtungen erfolgen.

Vervollständigt wird die Erfindung durch ein Kraftfahrzeug mit einem Diesel-Partikelfilter in einem Abgasstrang und mit einer erfindungsgemäßen Vorrichtung zur Behandlung des Diesel-Partikelfilters, sowie durch ein Computerprogramm, das es einer Datenverarbeitungseinrichtung ermöglicht, nachdem es in Speichermittel der Datenverarbeitungseinrichtung geladen worden ist, ein erfindungsgemäßes Verfahren zur Verifizierung eines Differenzdruckwertes $\Delta p$ an einem Diesel-Partikelfilter eines Abgasstranges eines Dieselaggregates durchzuführen. Das Computerprogramm kann dabei eine Erweiterung eines Motorsteuergeräteprogramms des Kraftfahrzeuges sein.

Weitere Aspekte der Erfindung sind ein computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein erfindungsgemäßes Verfahren zur Verifizierung eines Differenzdruckwertes $\Delta p$ an einem Diesel-Partikelfilter eines Abgasstranges eines Dieselaggregates durchzuführen; und ein Verfahren, bei dem ein erfindungsgemäßes Computerprogramm aus einem elektronischen Datennetz, wie beispielsweise aus dem Internet, auf eine an das Datennetz angeschlossene Datenverarbeitungseinrichtung heruntergeladen wird.

Die Erfindung wird nachfolgend in Ausführungsbeispielen anhand der zugehörigen Zeichnungen erläutert. Es zeigen:

Figur 1    einen herkömmlichen Abgasstrang, an dem ein Drucksensor angeordnet ist;
Figur 2    ein Diagramm zur Erläuterung einer statischen Offset-Adaption und
Figur 3    ein Diagramm zur Erläuterung der dynamischen Offset-Adaption.

Gegenstand der Erfindung ist ein Verfahren und eine Vorrichtung zur Verifizierung eines Messsignales des Drucksensors 10, insbesondere bei Verdacht von einfrierungsbedingten Blockierungen 13 in den Messleitungen 11, wie sie in Figur 1 dargestellt sind.

Die Erkennung eines unplausiblen Messsignales basiert auf der Auswertung charakteristischer Eigenschaften dieses Messsignales.

Zur Auswertung lässt sich eine statische Offset-Adaption, wie in Figur 2 dargestellt, oder eine dynamische Offset-Adaption, wie in Figur 3 dargestellt, verwenden.

Bei der in Figur 2 gezeigten statischen Offset-Adaption wird bei einem Abgasmassestrom dm = 0 ein statisch gemessener, unkorrigierter Differenzdruck $\Delta p_{dm=0}$, der einen zweiten Differenzdruck-Basiswert darstellt, in einem Steuergerät gespeichert. Dieser zweite Differenzdruck-Basiswert $\Delta p_{dm=0}$ entspricht einem Korrekturwert $\Delta p_{offset}$, der für gewöhnlich in einem Fahrzykluss angewendet wird, um im Betrieb des Diesel-Partikelfilters 23 den ermittelten Differenzdruckwert $\Delta p$ entsprechend zu korrigieren. Daraus ergibt sich ein offsetkorrigierter Differenzdruckwert $\Delta p_{cor} = \Delta p - \Delta p_{Offset}$.

Bei einer dynamischen Offset-Adaption, wie sie im Diagramm in Figur 3 dargestellt ist, werden während des Motorlaufs, also während des Betriebes des Diesel-Partikelfilters 23, entsprechend der Formel (1) Wertepaare vom Abgasmassenstrom $dm_x$ und unkorrigiertem Differenzdruckwert $\Delta p_x$ aufgenommen und abgespeichert. Aus den Wertepaaren wird eine Funktion f($\Delta p$; dm) abgeleitet. Durch Extrapolation $f_{extr}$ dieser Funktion f($\Delta p$; dm) bis zur Ordinate wird ein erster Differenzdruck-Basiswert $\Delta p_{dmextr=0}$ festgestellt, nämlich bei einem Abgasmassenstrom dm = 0. Dieser erste Differenzdruck-Basiswert $\Delta p_{dmextr=0}$ entspricht wiederum dem Korrekturwert $\Delta p_{offset}$.

Mithilfe des Offset-Wertes beziehungsweise Korrekturwertes $\Delta p_{offset}$ lässt sich ein korrigierter Differenzdruckwert $\Delta p_{cor}$ errechnen, nämlich aus $\Delta p_{cor} = \Delta p - \Delta p_{offset}$. Daraus wiederum lässt sich mittels einer Parallelverschiebung der Funktion f($\Delta p$;dm) eine korrigierte Funktion $f_{cor}$($\Delta p$; dm) ableiten.

Wie bereits in Bezug zur Erläuterung des Standes der Technik vermerkt, weichen die Druckverhältnisse $p_{1b}$ und $p_{2b}$ zwischen den Blockierungen 13 und dem Drucksensor 10 von den tatsächlichen Druckverhältnissen stromaufwärts 24 und stromabwärts 25 des Diesel-Partikelfilters 23 ab. Das heißt, dass die Beziehungen gemäß der Formel:

$$\Delta p = k_1 \bullet \frac{\eta}{\rho} \bullet dm + k_2 \bullet \frac{1}{\rho} \bullet dm^2 \qquad\qquad (1)$$

nicht mehr gelten. Es wird somit mit hoher Wahrscheinlichkeit ein Druckverlust $\Delta p$ über dem Diesel-Partikelfilter 23 gemessen, der gerade nicht dem mittels der statischen Offset-adaption (Figur 2) oder der dynamischen Offset-Adaption (Figur 3) ermittelten Druckverlust entspricht. Es besteht somit die folgende Beziehung:

$$\Delta p_{dm} \neq \Delta p_{Offset} \qquad\qquad (2)$$

Eine Korrektur des Offsets beziehungsweise des Korrekturwertes $\Delta p_{offset}$ ist demzufolge bei vorhandenen Blockierungen 13 in den Druckmessleitungen 11 nicht möglich. Aus diesem Grund wird die Berechnung des Korrekturwertes $\Delta p_{offset}$ nur bei Umgebungsbedingungen durchgeführt, bei denen sicher auszuschließen ist, dass eine einfrierungsbedingte Blockierung 13 vorhanden ist.

Zur Verifizierung eines ermittelten Differenzdruckwertes $\Delta p$ wird erfindungsgemäß die Differenz zwischen diesem Differenzdruckwert $\Delta p$ und einem Korrekturwert $\Delta p_{offset}$ mit einem Toleranzschwellwert verglichen. Der Korrekturwert $\Delta p_{offset}$ wird dabei aus der statischen Offset-Adaption gemäß Figur 2 oder der dynamischen Offset-Adaption gemäß Figur 3 gewonnen.

Der Toleranzschwellwert ist vorteilhafterweise ein Wert aus dem Bereich zwischen 10 hPa und 50 hPa, insbesondere zwischen 20 hPa und 30 hPa.

Im Falle, dass die Differenz zwischen den Differenzdruckwert $\Delta p$ und dem Korrekturwert $\Delta p_{offset}$ größer ist als der vorgegebene Toleranzschwellwert, ist der ermittelte Differenzdruckwert $\Delta p$ als nicht wahr zu erkennen. Das heißt, wenn es eine sehr große Abweichung zwischen dem Differenzdruckwert $\Delta p$ und dem Korrekturwert $\Delta p_{offset}$ gibt, müssen Druckverhältnisse bei ausgeschaltetem Dieselaggregat und somit nicht vorhandenem Abgasstrom 20 gemessen worden sein, die nicht dem ebenfalls bei einem Abgasmassenstrom dm = 0 ermittelten Korrekturwert $\Delta p_{offset}$ entsprechen. Demzufolge müssen Beeinträchtigungen der Messeinrichtung vorliegen. Somit kann der ermittelte Differenzdruckwert $\Delta p$ nicht als der wahre Wert angenommen werden. Daraus wiederum folgt, dass zumindest auf Basis des Druckverlustmodells keine Maßnahmen zur Behandlung beziehungsweise zur Regenerierung des Diesel-Partikelfilters 23 vorzunehmen sind, da die Rußbeladung nicht sicher ermittelt werden kann.

Sollte über eine längere Zeit und/oder über eine längere Fahrdistanz und/oder über eine bestimmte Anzahl von Fahrzyklen hinaus erkannt werden, dass der ermittelte Differenzdruckwert $\Delta p$ nicht wahr ist, ist eine Nachricht über einen Systemfehler zu generieren.

Bei einer Erhöhung der Umgebungstemperatur des Diesel-Partikelfilters 23 beziehungsweise des Abgasstranges 21, wozu auch die Wärme des Abgases 20 beiträgt, kommt es zum Auftauen der Blockierungen 13 in den Druckmessleitungen 11, so dass bei nicht vorhandenem Abgasmassenstrom dm mit dem Drucksensor 10 wiederum ein Differenzdruckwert $\Delta p$ gemessen wird, der dem Korrekturwert $\Delta p_{offset}$ entspricht, so dass die Differenz zwischen Differenzdruckwert $\Delta p$ und Korrekturwert $\Delta p_{offset}$ nicht größer ist als der vorgegebene Toleranzschwellwert, so dass von einem wahrheitsgemäß erfassten Differenzdruckwert $\Delta p$ ausgegangen werden kann.

Mit den erfindungsgemäßen Verfahren und den dazugehörigen Vorrichtungen wird durch die Auswertung charakteristischer Merkmale der Messsignale eine wesentlich differenziertere Möglichkeit zur Erkennung von Einfrierungen in der Diesel-Partikelfilter-Drucksensorik zur Verfügung gestellt. Darüber hinaus lassen sich aufgrund des erfindungsgemäß generierten Signales über die Nicht-Funktionsfähigkeit des Sensors (zum Beispiel "Sensor eingefroren") Maßnahmen zur Behandlung beziehungsweise zur Regenerierung des Diesel-Partikelfilters 23 vermeiden, die gegebenenfalls zu Beschädigungen oder vorzeitigem Verschleiß des Diesel-Partikelfilters 23 führen könnten.

**Bezugszeichenliste**

| | |
|---|---|
| 10 | Drucksensor |
| 11 | Druckmessleitung |
| 12 | blockierter Bereich |
| 13 | Blockierung |
| | |
| $p_{1b}$ | Druck im ersten blockierten Bereich |
| $p_{2b}$ | Druck im zweiten blockierten Bereich |
| | |
| 20 | Abgas |
| 21 | Abgasstrang |
| 22 | Strömungsrichtung |
| 23 | Diesel-Partikelfilter |

24 Position stromaufwärts des Diesel-Partikelfilters
25 Position stromabwärts des Diesel-Partikelfilters

$\Delta p$             Differenzdruckwert
dm           Abgasmassenstrom
$\Delta p_{dm=0}$      erster Differenzdruck-Basiswert
$\Delta p_{offset}$       Korrekturwert
$\Delta p_{cordm=0}$    korrigierter gemessener Druckverlust
$f(\Delta p; dm)$     Funktion aus gemessenen Druckverlust und Abgasmassenstrom
$f_{extr}$           Bereich der Extrapolation
$f_{cor}(\Delta p; dm)$    korrigierte Funktion
$\Delta p_{dmextr=0}$    zweiter Differenzdruck-Basiswert

**Patentansprüche**

1. Verfahren zur Verifizierung eines unter Anwendung wenigstens einer Messung ermittelten ersten Wertes eines Differenzdruckwertes ($\Delta p$) an einem Diesel-Partikelfilter (23) eines Abgasstranges (21) eines Dieselaggregates, wobei die Differenz zwischen diesem ersten Wert und einem Korrekturwert mit einem Toleranzschwellwert verglichen wird, und im Fall einer Differenz, die größer als der Toleranzschwellwert ist, der erste Wert als nicht wahr erkannt wird, wobei der Korrekturwert ($\Delta p_{offset}$) einem ersten Differenzdruck-Basiswert ($\Delta p_{dmextr=0}$) entspricht, **dadurch gekennzeichnet, dass** der erste Differenzdruck-Basiswert ($\Delta p_{dmextr=0}$) aus einer Extrapolation einer Funktion ($f(\Delta p; dm)$) ermittelt wird, die aus während der Durchströmung des Diesel-Partikelfilters (23) ermittelten Wertepaaren vom Abgasmassenstrom ($dm_x$) und unkorrigiertem Differenzdruckwert ($\Delta p_x$) generiert wird, wobei der erste Differenzdruck-Basiswert ($\Delta p_{dmextr=0}$) dem Wert der extrapolierten Funktion ($f_{extr}$) bei einem theoretischen Abgasmassenstrom ($dm$) von Null entspricht.

2. Verfahren zur Verifizierung nach Anspruch 1, **dadurch gekennzeichnet, dass** der erste Wert ein Differenzdruckwert ($\Delta p$) an einem Diesel-Partikelfilter (23) eines Abgasstranges (21) eines Dieselaggregates ist, und der Korrekturwert ($\Delta p_{offset}$) einem zweiten Differenzdruck-Basiswert ($\Delta p_{dm=0}$) am Diesel-Partikelfilter (23) entspricht, wenn der Diesel-Partikelfilter (23) nicht von Abgas (20) durchströmt wird, und wenn von einer zutreffenden Differenzdruckermittlung ausgegangen werden kann, wobei der zweite Differenzdruck-Basiswert ($\Delta p_{dm=0}$) ein aus Messungen am Diesel-Partikelfilter (23) ermittelter Wert ist, wenn kein Abgasmassenstrom ($dm$) im Diesel-Partikelfilter vorhanden ist.

3. Verfahren zur Verifizierung nach einem der vorhergehenden Ansprüche, **dadurch gekennzeichnet, dass** der absolute Betrag der Differenz zwischen dem ersten Wert und dem Korrekturwert mit dem Toleranzschwellwert verglichen wird.

4. Verfahren zur Behandlung eines Diesel-Partikelfilters (23), insbesondere zur Regenerierung eines Diesel-Partikelfilters (23), bei dem das Verfahren zur Verifizierung eines Differenzdruckwertes ($\Delta p$) an einem Diesel-Partikelfilter (23) eines Abgasstranges (21) eines Dieselaggregates gemäß wenigstens einem der Ansprüche 2 bis 3 durchgeführt wird, wobei bei Erkennung, dass der Differenzdruckwert ($\Delta p$) nicht wahr ist, ein Signal generiert wird, dessen Aussage ist, dass wenigstens ein Drucksensor (10) nicht funktionsfähig ist.

5. Verfahren zur Behandlung eines Diesel-Partikelfilters (23) nach Anspruch 4, **dadurch gekennzeichnet, dass**, wenn das Signal über die Nicht-Funktionsfähigkeit des Sensors länger als eine bestimmte Zeit und/oder über eine bestimmte Fahrdistanz eines mit dem Diesel-Partikelfilter versehenen Fahrzeugs und/oder über eine bestimmte Anzahl von Fahrzyklen eines mit dem Diesel-Partikelfilter versehenen Fahrzeugs ununterbrochen vorhanden ist, ein Signal über einen Systemfehler generiert wird.

6. Verfahren nach Anspruch 1, **dadurch gekennzeichnet, dass** der Differenzdruckwertes ($\Delta p$) des Diesel-Partikelfilters (23) aus Messungen des Abgasmassenstromes ($dm$) einer Dichte des Abgases ($\rho$) und einer dynamischen Viskosität ($\eta$) des Abgases sowie errechnet wird.

7. Vorrichtung zur Verifizierung eines Differenzdruckwertes ($\Delta p$) an einem Diesel-Partikelfilter (23) eines Abgasstranges (21) eines Dieselaggregates, mit Mitteln, die geeignet sind, das Verfahren nach einem der Ansprüche 1 bis 6 auszuführen, mit einer Einrichtung zur Messung eines Abgasmassenstroms ($dm$) und einer Berechnungseinrichtung zur Berechnung des Differenzdruckwertes ($\Delta p$), sowie mit einer Einrichtung zur Ermittlung eines Korrekturwertes und einer Einrichtung zur Ermittlung einer Differenz zwischen dem Differenzdruckwert ($\Delta$p) und dem Korrekturwert.

8. Vorrichtung nach Anspruch 7, umfassend einen Speicher, in dem wenigstens ein Toleranzschwellwert speicherbar oder gespeichert ist, und mit einer Vergleichseinheit zum Vergleichen der ermittelten Differenz mit einem Toleranzschwellwert und zur Auswertung des Vergleiches zur Erzeugung einer Aussage über die Wahrheit der Aussage des berechneten Differenzdruckwertes ($\Delta$p).

9. Vorrichtung nach Anspruch 7, umfassend eine Einrichtung zur Messung einer Dichte ($\rho$) und einer dynamischen Viskosität ($\eta$) des Abgases (20).

10. Vorrichtung zur Behandlung, insbesondere zur Regenerierung eines Diesel-Partikelfilters (23), umfassend eine Vorrichtung zur Verifizierung eines Differenzdruckwertes ($\Delta$p) gemäß Anspruch 7 und eine Einrichtung zur Erzeugung und Ausgabe und/oder Verwertung eines Signals entsprechend der gewonnenen Information über die Wahrheit des berechneten Differenzdruckwertes ($\Delta$p).

11. Kraftfahrzeug mit einem Diesel-Partikelfilter in einem Abgasstrang und mit einer Vorrichtung zur Behandlung des Diesel-Partikelfilters (23) gemäß Anspruch 10.

12. Computerprogramm, das es einer Vorrichtung nach einer der Ansprüche 7 bis 10 ermöglicht, nachdem es in Speichermittel der Vorrichtung geladen worden ist, ein Verfahren zur Verifizierung eines Differenzdruckwertes ($\Delta$p) an einem Diesel-Partikelfilter (23) eines Abgasstranges (21) eines Dieselaggregates gemäß einem der Ansprüche 2 und 3 durchzuführen.

**Claims**

1. Method for verifying a first value of a differential pressure value ($\Delta$p), which first value is determined using at least one measurement, at a diesel particulate filter (23) of an exhaust gas section (21) of a diesel engine, the difference between the said first value and a correction value being compared with a tolerance threshold value and, in the case of a difference which is greater than the tolerance threshold value, the first value being recognised as being untrue, the correction value ($\Delta p_{offset}$) corresponding to a first differential pressure base value ($\Delta p_{dmextr=0}$), **charac-terized in that** the first differential pressure base value ($\Delta p_{dmextr=0}$) is determined from an extrapolation of a function ($f(\Delta p; dm)$) which is generated from value pairs of the exhaust gas mass flow ($dm_x$) and the non-corrected differential pressure value ($\Delta p_x$), which value pairs are determined during the throughflow of the diesel particulate filter (23), the first differential pressure base value ($\Delta p_{dmextr=0}$) corresponding to the value of the extrapolated function ($f_{extr}$) in the case of a theoretical exhaust gas mass flow (dm) of zero.

2. Method for verifying according to Claim 1, **characterized in that** the first value is a differential pressure value ($\Delta$p) at a diesel particulate filter (23) of an exhaust gas section (21) of a diesel engine, and the correction value ($\Delta p_{offset}$) corresponds to a second differential pressure base value ($\Delta p_{dm=0}$) at the diesel particulate filter (23) if the diesel particulate filter (23) is not flowed through by exhaust gas (20), and if a relevant differential pressure determination can be assumed, the second differential pressure base value ($\Delta p_{dm=0}$) being a value which is determined from measurements at the diesel particulate filter (23) if there is no exhaust gas mass flow (dm) in the diesel particulate filter.

3. Method for verifying according to either of the preceding claims, **characterized in that** the absolute magnitude of the difference between the first value and the correction value is compared with the tolerance threshold value.

4. Method for treating a diesel particulate filter (23), in particular for regenerating a diesel particulate filter (23), in which method the method for verifying a differential pressure value ($\Delta$p) at a diesel particulate filter (23) of an exhaust gas section (21) of a diesel engine according to at least one of Claims 2 and 3 is carried out, a signal being generated if it is recognised that the differential pressure value ($\Delta$p) is untrue, the message of which signal is that at least one pressure sensor (10) is inoperable.

5. Method for treating a diesel particulate filter (23) according to Claim 4, **characterized in that**, if the signal about the inoperability of the sensor is present in an uninterrupted manner for a longer time than a defined time and/or over a defined driving distance of a vehicle which is provided with the diesel particulate filter and/or over a defined number of driving cycles of a vehicle which is provided with the diesel particulate filter, a signal about a system error is generated.

6. Method according to Claim 1, **characterized in that** the differential pressure value ($\Delta p$) of the diesel particulate filter (23) is calculated from measurements of the exhaust gas mass flow (dm), a density of the exhaust gas ($\rho$) and a dynamic viscosity ($\eta$) of the exhaust gas.

7. Apparatus for verifying a differential pressure value ($\Delta p$) at a diesel particulate filter (23) of an exhaust gas section (21) of a diesel engine, having means which are suitable to carry out the method according to one of Claims 1 to 6, having a device for measuring an exhaust gas mass flow (dm) and a calculating device for calculating the differential pressure value ($\Delta p$), and having a device for determining a correction value and a device for determining a difference between the differential pressure value ($\Delta p$) and the correction value.

8. Apparatus according to Claim 7, comprising a memory, in which at least one tolerance threshold value can be stored or is stored, and having a comparison unit for comparing the determined difference with a tolerance threshold value and for evaluating the comparison in order to produce a message about the veracity of the message of the calculated differential pressure value ($\Delta p$).

9. Apparatus according to Claim 7, comprising a device for measuring a density ($\rho$) and a dynamic viscosity ($\eta$) of the exhaust gas (20).

10. Apparatus for treating, in particular for regenerating a diesel particulate filter (23), comprising an apparatus for verifying a differential pressure value ($\Delta p$) according to Claim 7 and a device for producing and outputting and/or evaluating a signal in accordance with the obtained information about the veracity of the calculated differential pressure value ($\Delta p$).

11. Motor vehicle having a diesel particulate filter in an exhaust gas section and having an apparatus for treating the diesel particulate filter (23) according to Claim 10.

12. Computer program which makes it possible, after the said computer program has been loaded into storage means of an apparatus according to one of Claims 7 to 10, for the said apparatus to carry out a method for verifying a differential pressure value ($\Delta p$) at a diesel particulate filter (23) of an exhaust gas section (21) of a diesel engine according to either of Claims 2 and 3.

**Revendications**

1. Procédé pour vérifier une première valeur d'une valeur de pression différentielle ($\Delta p$) déterminée par la mise en oeuvre d'au moins une mesure sur un filtre à particules diesel (23) d'une ligne d'échappement (21) d'un groupe diesel, dans lequel on compare la différence entre cette première valeur et une valeur de correction à une valeur de seuil de tolérance, et dans le cas d'une différence qui est supérieure à la valeur de seuil de tolérance, on ne reconnaît pas la première valeur comme vraie, dans lequel la valeur de correction ($\Delta p_{offset}$) correspond à une première valeur de base de pression différentielle ($\Delta p_{dmextr=0}$) **caractérisé en ce que** l'on détermine la première valeur de base de pression différentielle ($\Delta p_{dmextr=0}$) à partir d'une extrapolation d'une fonction [f($\Delta p$; dm)], que l'on génère à partir de paires de valeurs du courant massique de gaz d'échappement ($dm_x$) et de la valeur de pression différentielle ($\Delta p_x$) déterminées pendant la traversée du filtre à particules (23), dans lequel la première valeur de base de pression différentielle ($\Delta p_{dmextr=0}$) correspond à la valeur de la fonction extrapolée ($f_{extr}$) pour un courant massique théorique de gaz d'échappement (dm) égal à zéro.

2. Procédé de vérification selon la revendication 1, **caractérisé en ce que** la première valeur est une valeur de pression différentielle ($\Delta p$) à un filtre à particules diesel (23) d'une ligne d'échappement (21) d'un groupe diesel, et la valeur de correction ($\Delta p_{offset}$) correspond à une deuxième valeur de base de pression différentielle ($\Delta p_{dm=0}$) au filtre à particules diesel (23), lorsque le filtre à particules diesel (23) n'est pas traversé par du gaz d'échappement (20), et lorsque l'on peut partir d'une détermination de pression différentielle pertinente, dans lequel la deuxième valeur de base de pression différentielle ($\Delta p_{dm=0}$) est une valeur déterminée à partir de mesures sur le filtre à particules diesel (23), lorsqu'il n'y a aucun courant de gaz d'échappement (dm) dans le filtre à particules diesel.

3. Procédé de vérification selon l'une quelconque des revendications précédentes, **caractérisé en ce que** l'on compare la valeur absolue de la différence entre la première valeur et la valeur de correction à la valeur de seuil de tolérance.

4. Procédé de traitement d'un filtre à particules diesel (23), en particulier pour la régénération d'un filtre à particules diesel (23), dans lequel on exécute le procédé pour vérifier une valeur de pression différentielle (Δp) sur un filtre à particules diesel (23) d'une ligne d'échappement (21) d'un groupe diesel selon au moins une des revendications 2 à 3, dans lequel, lorsque l'on reconnaît que la valeur de pression différentielle (Δp) n'est pas vraie, on génère un signal dont la signification est qu'au moins un capteur de pression (10) n'est pas fonctionnel.

5. Procédé de traitement d'un filtre à particules diesel (23) selon la revendication 4, **caractérisé en ce que**, lorsque le signal relatif à la non-fonctionnalité du capteur est plus long qu'une durée déterminée et/ou est présent sans interruption sur une distance de roulage déterminée d'un véhicule équipé du filtre à particules diesel et/ou est présent sur un nombre déterminé de cycles de roulage d'un véhicule équipé du filtre à particules diesel, on génère un signal relatif à un défaut du système.

6. Procédé selon la revendication 1, **caractérisé en ce que** l'on calcule la valeur de pression différentielle (Δp) du filtre à particules diesel (23) à partir de mesures du courant massique de gaz d'échappement (dm), d'une densité du gaz d'échappement (ρ) ainsi que d'une viscosité dynamique (η) du gaz d'échappement.

7. Dispositif pour vérifier une valeur de pression différentielle (Δp) à un filtre à particules diesel (23) d'une ligne d'échappement (21) d'un groupe diesel, avec des moyens qui sont aptes à exécuter le procédé selon l'une quelconque des revendications 1 à 6, avec un dispositif pour la mesure d'un courant massique de gaz d'échappement (dm) et avec un dispositif de calcul pour le calcul de la valeur de pression différentielle (Δp), ainsi qu'avec un dispositif pour la détermination d'une valeur de correction et un dispositif pour déterminer une différence entre la valeur de pression différentielle (Δp) et la valeur de correction.

8. Dispositif selon la revendication 7, comprenant une mémoire, dans laquelle au moins une valeur de seuil de tolérance peut être ou est stockée, et avec une unité de comparaison pour comparer la différence déterminée à une valeur de seuil de tolérance et pour évaluer la comparaison en vue de la production d'une estimation de la vérité de la signification de la valeur de pression différentielle calculée (Δp).

9. Dispositif selon la revendication 7, comprenant un dispositif pour la mesure d'une densité (ρ) et d'une viscosité dynamique (η) du gaz d'échappement (20).

10. Dispositif pour le traitement, en particulier pour la régénération d'un filtre à particules diesel (23), comprenant un dispositif pour vérifier une valeur de pression différentielle (Δp) selon la revendication 7 et un dispositif pour la production et l'émission et/ou l'évaluation d'un signal correspondant à l'information obtenue sur la vérité de la valeur de pression différentielle calculée (Δp).

11. Véhicule automobile avec un filtre à particules diesel dans une ligne d'échappement et avec un dispositif pour le traitement du filtre à particules diesel (23) selon la revendication 10.

12. Programme informatique, qui permet à un dispositif selon l'une quelconque des revendications 7 à 10, après qu'il ait été chargé dans des moyens de mémoire du dispositif, d'exécuter un procédé pour vérifier une valeur de pression différentielle (Δp) à un filtre à particules diesel (23) d'une ligne d'échappement (21) d'un groupe diesel selon une des revendications 2 et 3.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004057612 B4
- DE 102004007000 A1
- EP 1777399 A2
- DE 10145863 A1
- DE 102004040924 A1
- DE 102009001528 A1
- US 2009193904 A1